# FASCICULE DE BREVET EUROPEEN

(11) **EP 0 639 726 B1**
(45) Date de publication et mention de la délivrance du brevet: **13.09.2000**
(21) Numéro de dépôt: 94401807.6
(22) Date de dépôt: 04.08.1994
(51) Int. Cl.: F16F 9/36, F16F 9/49

(54) **Dispositif d'obturation monobloc à guide centreur lubrifié pour tube d'amortisseur hydraulique pressurisé**
Einzelstück-Abdichtungsvorrichtung durch eine geschmierte Führung für hydraulische Stossdämpfer
One-piece sealing arrangement by means of a lubricated centering guide for pressurized hydraulic shockabsorbers

(30) Priorité: 06.08.1993 FR 9309743; 06.04.1994 FR 9404026
(43) Date de publication de la demande: 22.02.1995
(73) Titulaire: SOCIETE FRANCAISE DES AMORTISSEURS DE CARBON, F-27430 Saint Pierre du Vauvray (FR)
(72) Inventeur: Bataille, Alain, F-75015 Paris (FR)
(74) Mandataire: Casalonga, Axel

(56) Documents cités:
- EP-A- 0 059 150
- EP-A- 0 565 832
- DE-A- 1 916 487
- DE-A- 2 905 928
- DE-U- 7 708 863
- GB-A- 2 009 866
- US-A- 3 837 445
- PATENT ABSTRACTS OF JAPAN vol. 8, no. 195 (M-323) (1632) 7 Septembre 1984 & JP-A-59 083 846 (YAMAHA HATSUDOKI K.K.) 15 Mai 1984

## Description

La présente invention concerne un tube d'amortisseur hydraulique pressurisé, notamment de type monotube, équipé d'un dispositif d'obturation du tube.

Les amortisseurs hydrauliques sont couramment utilisés pour équiper des véhicules, en particulier des véhicules automobiles. Un amortisseur hydraulique pressurisé comprend en général un piston apte à coulisser à l'intérieur d'un tube en définissant deux chambres de part et d'autre du piston et remplies d'un liquide. Le piston présente un passage traversant qui met en communication les deux chambres en coopérant avec un clapet flottant, lequel régule l'ouverture du passage en fonction du sens d'écoulement du liquide dans le passage. Cet écoulement est provoqué par le mouvement axial du piston dans le tube lors du fonctionnement de l'amortisseur en phase d'extension ou de compression. Le piston est habituellement fixé à une extrémité d'une tige dont le déplacement dans le tube est guidé axialement par un dispositif d'obturation monté à une partie d'extrémité du tube.

Les dispositifs d'obturation ont pour fonction d'une part d'obturer de façon étanche une partie d'extrémité du tube de l'amortisseur, et d'autre part de guider axialement le mouvement de la tige et donc du piston à l'intérieur du tube de l'amortisseur. Généralement, un dispositif d'obturation comprend un bouchon guide, au moins un joint d'étanchéité, un élément de butée de détente et des moyens de fixation de l'ensemble dans le tube, le ou les joints d'étanchéité étant pris en sandwich entre le bouchon guide et l'élément de butée de détente.

Comme son nom l'indique, le bouchon guide assure le guidage axial de la tige du piston dans le tube de l'amortisseur. Le joint d'étanchéité assure aussi bien l'étanchéité entre le bouchon guide et le tube, que l'étanchéité entre le bouchon guide et la tige. Il en résulte que le bouchon guide n'est pratiquement pas en contact avec le liquide de l'amortisseur, constitué généralement d'une huile incompressible. En conséquence, le guidage de la tige par le bouchon guide n'est pas lubrifié par l'huile de l'amortisseur. Etant donné que le bouchon guide et la tige sont réalisés en matériaux métalliques, il se produit une friction entre ces deux pièces lors du fonctionnement de l'amortisseur. Cette friction provoque d'une part un échauffement thermique de la tige et du bouchon guide accélérant le vieillissement du joint d'étanchéité adjacent, et d'autre part l'usure entre la tige et le bouchon guide. Le vieillissement du joint d'étanchéité provoqué par l'échauffement thermique raccourcit considérablement la durée de vie du joint. L'usure entre la tige et le bouchon guide augmente le jeu radial entre ces deux pièces et réduit donc la précision de guidage du mouvement axial du piston dans le tube de l'amortisseur.

En outre, le jeu radial nécessaire entre la tige et le bouchon guide et l'absence de lubrification des surfaces de guidage provoquent des bruits dûs aux chocs entre la tige et le bouchon guide lors du fonctionnement de l'amortisseur. En effet, les contraintes soumises à l'amortisseur ne sont pas strictement axiales. Les composantes radiales de ces contraintes provoquent d'abord un choc mécanique entre la tige et le bouchon guide, choc qui sera suivi de vibrations de la tige et cause un effet sonore de grésillement dû à l'interférence entre la tige et le bouchon guide lorsque l'amplitude des vibrations de la tige est supérieure ou égale au jeu radial existant entre la tige et le bouchon guide. Les bruits ainsi provoqués constituent une nuisance pour l'utilisateur.

Par ailleurs, le fait d'avoir au moins trois pièces séparées et empilées l'une au dessus de l'autre (bouchon guide, joint(s) d'étanchéité et élément de butée de détente), le montage du dispositif d'obturation nécessite un temps relativement long, ce qui augmente le coût de l'amortisseur.

Un bouchon lubrifié est connu par le résumé en langue anglaise de la publication de la demande de brevet japonais n⁰ 5983846 (A) conforme au préambule de la revendication 1. Ce document décrit un dispositif d'obturation pour un tube d'amortisseur possédant une embase, un bouchon et un premier joint d'étanchéité pris en sandwich entre le bouchon et l'embase. Un deuxième joint d'étanchéité est placé à l'extrémité du bouchon pour délimiter avec le premier joint une réserve de lubrifiant destiné à lubrifier la partie de la tige du piston coulissant à l'intérieur du bouchon.

La présente invention a pour objet de résoudre l'ensemble des problèmes évoqués ci-dessus en proposant un dispositif d'obturation structure simple et efficace.

Selon l'invention, on crée un guidage lubrifié de la tige du piston à l'aide d'un guide qui remplace l'élément de butée de détente classique et constitue également un support de centrage pour le bouchon et le joint d'étanchéité. On supprime alors la fonction de guidage de la tige par le bouchon en laissant un jeu radial suffisant entre le bouchon et la tige le traversant.

Telle que revendiquée, l'invention concerne un tube d'amortisseur hydraulique pressurisé contenant un piston coulissant pourvu d'une tige axiale et un dispositif d'obturation du tube comprenant un joint d'étanchéité, un élément de butée de détente constitué par un guide sous forme cylindrique pourvu d'une embase de guidage présentant une ouverture centrale pour guider le mouvement axial de la tige, un bouchon ayant une ouverture centrale ayant un diamètre supérieur au diamètre de la tige du piston pour définir un jeu radial évitant un contact mécanique de guidage de la tige, entre le bouchon et la tige pendant le fonctionnement de l'amortisseur, et présentant un logement circulaire autour de son ouverture centrale pour recevoir une partie du joint d'étanchéité pris en sandwich entre le bouchon et l'embase de guidage, et des moyens de fixation du dispositif d'obturation dans le tube. Selon l'invention le guide cylindrique de l'élément de butée de détente comporte une paroi périphérique axiale définissant un logement circulaire pour supporter et centrer le joint d'étanchéité et le bouchon, et l'embase de guidage comporte une ou plusieurs perforations réparties sur un trajet circulaire pour assurer la communication du fluide de l'amortisseur entre d'une part un volume de détente défini par le joint d'étanchéité et l'embase et d'autre part l'intérieur du tube.

Autrement dit, l'élément de butée de détente constitue un guide réalisé sous forme cylindrique avec une embase de guidage pour guider axialement la tige du piston et une paroi périphérique axiale définissant avec l'embase un logement circulaire pour centrer le joint d'étanchéité et le bouchon. L'embase présente une ou plusieurs perforations réparties sur un trajet circulaire concentrique à la tige. Les perforations de l'embase permettent une communication permanente entre l'huile de l'amortisseur et un volume de détente pour l'huile entre le joint d'étanchéité centré dans le logement et l'embase de guidage. Le volume de détente peut être défini par une gorge annulaire pratiquée sur le côté supérieur de l'embase, le fond de la gorge communiquant avec lesdites perforations, ou par une gorge annulaire pratiquée sur le joint d'étanchéité en regard des perforations de l'embase, ou encore par une surface inclinée du côté supérieur de l'embase ou du joint d'étanchéité.

Le bouchon présente une ouverture centrale circulaire permettant le passage de la tige avec un jeu radial. Le joint d'étanchéité est pris en sandwich entre le bouchon et l'embase de guidage au fond du logement circulaire. Le volume de détente peut être défini par deux couronnes concentriques d'appui axial entre le joint d'étanchéité et l'embase de guidage.

Le dispositif d'obturation de l'invention présente une structure monobloc avec le bouchon et le joint d'étanchéité intégrés dans le logement circulaire du guide. Le montage du dispositif dans le tube de l'amortisseur se trouve ainsi simplifié.

Selon un mode de réalisation de l'invention, la partie inférieure de l'embase de guidage du dispositif d'obturation est conformée de façon à coopérer avec une partie supérieure prédéterminée du piston lors de son coulissement, l'embase de guidage ainsi conformée et ladite partie supérieure prédéterminée du piston formant ensemble une butée hydraulique.

Il est également possible de prévoir un organe élastique auxiliaire de butée disposée entre la partie supérieure prédéterminée du piston et la face intérieure du l'embase de guidage.

L'invention sera mieux comprise à l'étude de la description détaillée de quelques modes de réalisation pris à titre nullement limitatif et illustrés par les dessins annexés, sur lesquels :
la figure 1 est une coupe axiale schématique d'un amortisseur hydraulique pressurisé monotube classique,
la figure 2 est une vue partielle de la figure 1 avec l'amortisseur équipé du dispositif d'obturation selon un premier mode de réalisation de l'invention,
la figure 3 est une vue similaire à la figure 2 représentant un second mode de réalisation de l'invention,
la figure 4 est une vue similaire à la figure 3 représentant un troisième mode de réalisation de l'invention,
la figure 5 est une vue similaire à la figure 2 représentant un quatrième mode de réalisation de l'invention,
la figure 6 est une vue similaire à la figure 5 représentant un cinquième mode de réalisation de l'invention,
la figure 7 est une vue similaire à la figure 5 représentant un sixième mode de réalisation de l'invention, et,
les figures 8 à 11 représentent d'autres modes de réalisation d'un dispositif d'obturation permettant l'obtention d'une butée hydraulique selon l'invention.

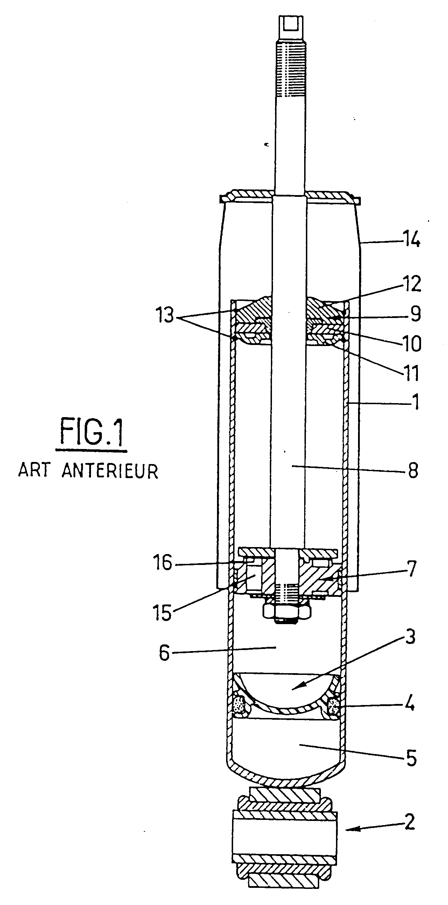

Comme illustré sur la figure 1, l'amortisseur hydraulique pressurisé monotube comprend un tube 1 fixé à son extrémité inférieure par un oeillet 2. Un piston séparateur gaz/liquide 3, monté libre à coulissement dans la partie inférieure du tube 1, est muni d'un joint torique d'étanchéité 4 et sépare le tube en deux compartiments fermés. Le compartiment inférieur 5 contient un gaz sous pression et le compartiment supérieur 6 est rempli d'un liquide qui est en général une huile incompressible. Un second piston 7 est fixé à l'extrémité inférieure d'une tige 8 dont le déplacement dans le tube 1 est guidé par un dispositif d'obturation 9 fixé à la partie supérieure du tube 1. L'extrémité supérieure de la tige 8 du piston 7 est rendue solidaire d'un goujon de fixation. L'amortisseur peut être complété par un protecteur 14 sous forme générale tubulaire rendue solidaire de la partie supérieure de la tige 8 et venant coiffer par dessus la partie supérieure du tube 1. Pour assurer le fonctionnement de l'amortisseur, le piston 7 présente des passages permanents 15 pour l'huile de l'amortisseur. Les passages 15 coopèrent avec un clapet flottant 16 pour définir de part et d'autre du piston 7 deux chambres hydrauliquement actives.

Le dispositif d'obturation 9, dans sa conception classique, comprend un joint d'étanchéité 10, un élément de butée de détente 11 réalisé à partir d'un flasque métallique et un bouchon guide 12 contre la face interne duquel est appliqué le joint d'étanchéité 10 plaqué par la pression d'huile et maintenu en place par l'élément de butée de détente 11. L'ensemble est fixé à l'intérieur du tube 1 à sa partie supérieure par deux circlips 13. Le guidage axial de la tige 8 du piston 7 est réalisé à l'aide du bouchon guide 12. L'élément de butée de détente 11 présente une ouverture centrale qui laisse traverser la tige 8 avec jeux radial et assure le maintien du joint d'étanchéité 10. Le joint d'étanchéité 10 est constitué de deux parties complémentaires : une première partie en rondelle dite statique assurant l'étanchéité entre le bouchon guide 12 et la paroi interne du tube 1, une seconde partie dite dynamique qui entoure la tige 8 par déformation élastique afin d'assurer l'étanchéité entre le bouchon guide 12 et la tige 8 du piston 7. Le joint d'étanchéité 10 est réalisé à partir d'un ou de deux élastomères différents.

Etant donné que le joint d'étanchéité 10 empêche l'huile de l'amortisseur de pénétrer dans les surfaces de contact entre les bouchon guide 12 et la tige 8, il n'existe pratiquement pas de lubrification sur ces surfaces de contact. Le fonctionnement répété de l'amortisseur entraîne alors l'usure par friction des surfaces de contact entre la tige 8 métallique et le bouchon guide 12 souvent métallique. La friction peut provoquer un échauffement thermique local qui détérioré la partie dynamique du joint d'étanchéité 10 en élastomère. De plus, lorsque l'amortisseur subit des contraintes non strictement axiales, il se produit un choc entre le bouchon guide 12 et la tige 8 en flexion, ce qui peut causer des bruits, sources de gêne au conducteur de véhicule équipé de l'amortisseur.

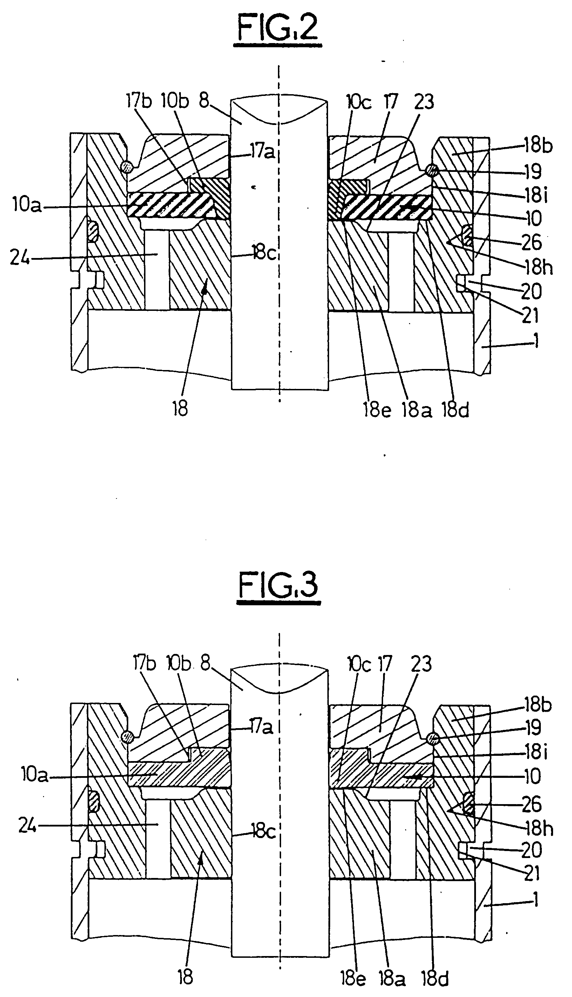

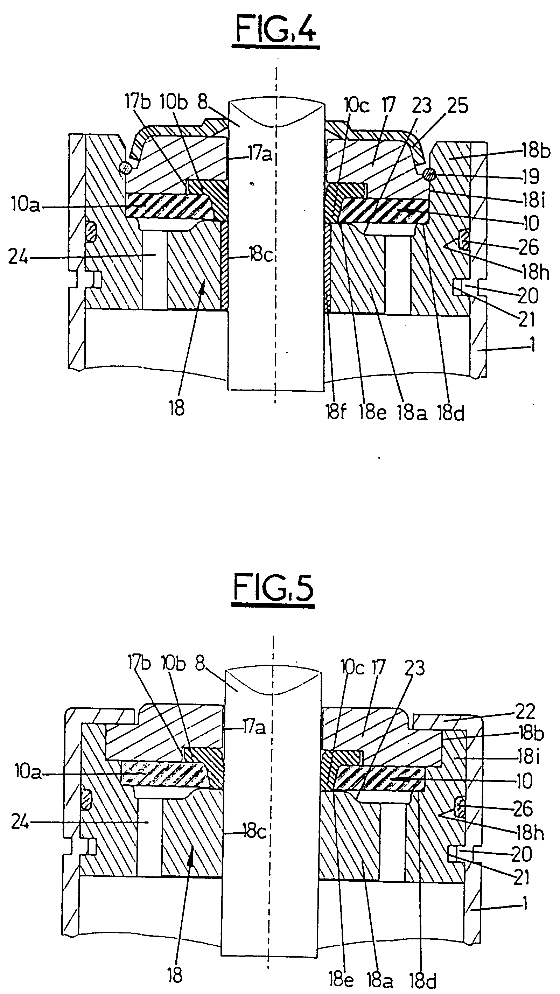

Comme illustré sur les figures 2 à 7, le dispositif d'obturation selon l'invention comprend un joint d'étanchéité 10 en deux parties assemblées concentriques : une partie statique 10a sous forme d'une rondelle et une partie dynamique 10b également annulaire et centrée par rapport à la partie statique 10a. Le joint d'étanchéité 10 peut également être formé d'une seule pièce (figure 3). La partie dynamique 10b du joint est forcée en expansion radiale par la tige 8 du piston 7 la traversant et joue un rôle de racleur d'huile autour de la tige 8. La partie statique 10a du joint présente son pourtour extérieur en contact avec une surface périphérique interne d'un logement circulaire d'un guide 18 qui sera décrit par la suite.

Le dispositif d'obturation comprend également un bouchon 17 annulaire dont le diamètre extérieur est sensiblement identique ou légèrement inférieur au diamètre intérieur d'une surface périphérique du logement circulaire du guide 18 et dont le diamètre intérieur est supérieur au diamètre de la tige 8 du piston, de façon à présenter un jeu radial évitant le contact direct entre le bouchon 17 et la tige 8 pendant le fonctionnement de l'amortisseur.

Le dispositif d'obturation comprend en outre un guide lubrifié 18 sous forme cylindrique avec une embase 18a, dont le diamètre extérieur est sensiblement identique au diamètre intérieur du tube 1 de l'amortisseur et dont le diamètre intérieur est très légèrement supérieur au diamètre de la tige 8 du piston, de façon à pouvoir guider le mouvement axial du piston. L'embase 18a de guidage est prolongée vers le haut par une paroi périphérique axiale 18b dont la surface extérieure cylindrique épouse la paroi intérieure du tube 1 de l'amortisseur. La paroi périphérique 18b définit avec l'embase de guidage 18a un logement circulaire ouvert vers le haut permettant de recevoir et de centrer le joint d'étanchéité 10 et le bouchon 17.

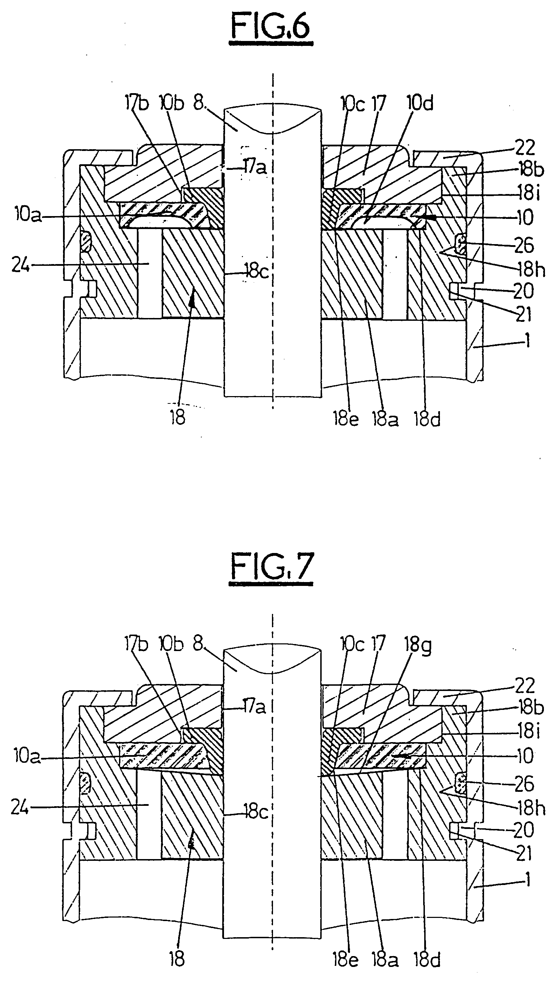

Le bouchon 17 et l'embase de guidage 18a prend en sandwich le joint d'étanchéité 10 autour de la tige 8 au fond du logement circulaire du guide 18 au voisinage de la partie d'extrémité supérieure du tube 1 de l'amortisseur. La fixation axiale de cet ensemble dans le tube 1 peut être effectuée à l'aide d'un circlips 19 constituant une butée axiale pour le bouchon 17 dans le logement circulaire du guide lubrifié 18 et d'une déformation 20 par étranglement radial du tube 1 coopérant avec une gorge périphérique 21 du guide lubrifié 18 pour constituer une butée axiale au guide (figures 2 à 4); ou un sertissage 22 de l'extrémité supérieure du tube 1 sur le bouchon 17 et des déformations 20 par étranglement radial du tube 1 coopérant avec une gorge périphérique 21 du guide lubrifié 18 ou avec l'extrémité inférieure du guide sans gorge périphérique pour constituer une butée axiale au guide lubrifié 18 (figures 5 à 7).

Comme illustré sur les figures 2 à 5, le guide lubrifié 18 cylindrique peut présenter sur l'embase 18a une gorge annulaire 23 concentrique à l'ouverture centrale 18c qui est destinée au guidage axial de la tige 8 du piston. La gorge annulaire 23 présente une section sensiblement trapézoïdale ou en V évasée vers son ouverture. Au fond de la gorge annulaire 23 débouchent une ou plusieurs perforations 24 axiales traversant le guide 18 et réparties de façon régulière le long de la gorge annulaire 23. Ainsi, la gorge annulaire 23 définit un volume de détente pour l'huile entre le joint d'étanchéité 10 et le guide 18, le volume de détente communiquant avec l'huile de l'amortisseur au travers des perforations 24.

Dans la pratique, le diamètre de l'ouverture centrale 18c du guide lubrifié 18 est supérieure au diamètre de la tige 8 du piston de quelques centièmes de millimètre, de préférence en dessous d'un dixième de millimètre de façon à permettre un bon guidage du mouvement de la tige 8. Cette différence de diamètre est suffisante pour permettre la présence permanente d'un film d'huile entre le guide 18 et la tige 8, puisque le guide 18 est entièrement baigné dans l'huile de l'amortisseur, et que les surfaces de guidage entre le guide 18 et la tige 8 est constamment alimenté en huile d'une part par capillarité et d'autre part par le mouvement axial de la tige 8 qui ramène de l'huile dans cet espace de guidage. Le guide 18 est ainsi constamment lubrifié, ce qui a pour conséquence de réduire l'usure entre la tige 8 et le guide 18 et d'augmenter alors la durée de vie des pièces. Le film d'huile présent aux surfaces de guidage permet également de réduire l'échauffement thermique des pièces, notamment du guide 18 qui est baigné dans l'huile et refroidi par celle-ci.

Le joint d'étanchéité 10 est réalisé en élastomère, les parties statique 10a et dynamique 10b peuvent présenter des compositions chimiques différentes. Afin de permettre la déformation du joint d'étanchéité 10 autour de la tige 8, sur la face inférieure du bouchon 17 est pratiqué un logement annulaire 17b. Le diamètre de l'ouverture centrale 17a du bouchon 17 est supérieur au diamètre de la tige 8 de quelques dixièmes de millimètre, de préférence inférieur à 1 mm. Un jeu radial trop important entre le bouchon 17 et la tige 8 risque de tolérer une déformation élastique trop important au joint d'étanchéité 10, ce qui peut entraîner une fuite d'huile au travers du joint 10b autour de la tige 8, la pression d'huile de l'amortisseur pouvant en effet atteindre jusqu'à 250 bars pendant le fonctionnement de l'amortisseur.

De préférence le joint d'étanchéité 10 est mécaniquement pris en sandwich entre le bouchon 17 et l'embase de guidage 18a par deux surfaces concentriques 18d et 18e de l'embase 18a séparées radialement par la gorge annulaire 23 qui définit le volume de détente pour l'huile entre le joint d'étanchéité 10 et le guide 18. Le joint 10 est alors exposé à la pression d'huile sur une grande partie de sa surface inférieure, afin de permettre une bonne déformation de l'ensemble du joint pour assurer sa fonction d'étanchéité. Il est possible d'augmenter la surface du joint d'étanchéité 10 en contact permanent avec l'huile de l'amortisseur en rendant la surface annulaire intérieure 18e du guide 18 en retrait axialement par rapport à la surface annulaire extérieure 18d du guide 18, lesdites surfaces annulaires étant orientées face à la surface inférieure du joint d'étanchéité 10. Il est alors avantageux de prévoir une couronne 10c en saillie axiale par rapport à la surface inférieure du joint d'étanchéité 10 et en appui axial sur la surface annulaire intérieure 18e en retrait du guide 18. Ainsi, le joint d'étanchéité 10 est mieux asservi par l'huile de l'amortisseur. La variation de la pression d'huile pendant le fonctionnement de l'amortisseur n'agit pas sur le guide lubrifié 18 dont les deux faces de l'embase 18a subit la même pression hydraulique grâce aux perforations 24.

Il importe de créer un volume de détente pour l'huile entre le guide 18 et le joint d'étanchéité 10 qui soit en équipression avec l'huile de l'amortisseur contenue dans le tube 1, afin d'éviter la surpression au niveau de la partie dynamique 10b du joint d'étanchéité pouvant provoquer une fuite de l'huile vers l'extérieur.

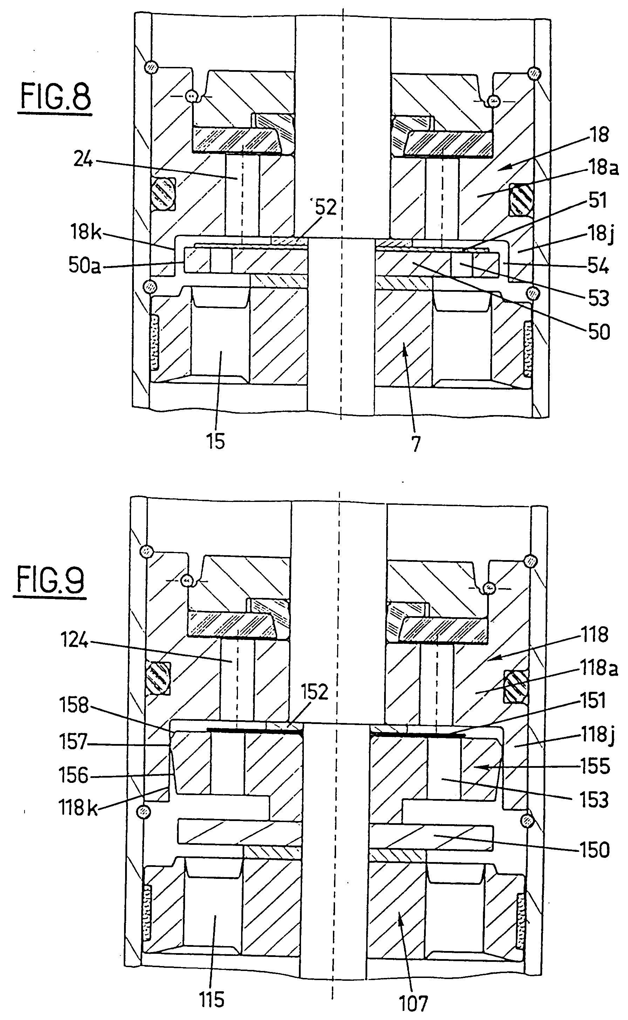

Les figures 6 et 7 montrent deux autres variantes de l'invention permettant de réaliser le volume de détente pour l'huile. Au lieu de prévoir une gorge annulaire 23 sur le guide lubrifié 18, il est possible de réaliser la partie statique 10a du joint d'étanchéité 10 avec une gorge annulaire 10d en regard axialement des perforations 24 du guide 18 (figure 6), ou de réaliser une surface légèrement conique 18g vers l'intérieur sur le côté supérieur de l'embase 18a du guide 18 et orientée face au joint d'étanchéité 10 (figure 6).

D'une manière générale, la tige 8 est réalisée en acier chromé dure pour la rendre résistante à l'usure et à la corrosion. Le guide 18 peut être réalisé en fer fritté imprégné d'huile ou en fer fritté ayant subi un traitement du surface de durcissement à la vapeur d'eau, ou en aluminium anodisé dur.

Le guide lubrifié 18 peut être réalisé non pas en monobloc mais en deux parties composées (figure 4): un corps 18 présentant un alésage central circulaire et un coussinet 18f tubulaire rapporté dans l'alésage central du corps de guide 18 et offrant une surface de frottement et de guidage à la tige 8 du piston. Le coussinet 18f peut présenter sur sa surface intérieure une couche en matière plastique connue sous le nom de TEFLON.

Afin d'éviter l'introduction de particules polluantes, de poussière ou de sable dans le jeu radial existant entre la tige 8 et le bouchon 17, le dispositif d'obturation de l'invention comprend de préférence des moyens de raclage autour de la tige 8 au dessus du bouchon 17. Parmi les solutions possibles, on peut prévoir un racleur annulaire 25 en matière plastique (figure 4) fixé sur la surface supérieure du bouchon 17 à l'aide par exemple d'un flasque annulaire non représenté. Le moyen de raclage 25 présente une lèvre circonférentielle intérieure en appui autour de la tige 8. Le moyen de raclage 25 peut évidemment être utilisé pour les autres modes de réalisation de l'invention.

Pour améliorer l'étanchéité entre le guide 18 et le tube 1 de l'amortisseur, on peut prévoir une gorge périphérique d'étanchéité 18h sur le pourtour du guide recevant un joint torique 26 en caoutchouc qui est comprimé radialement dans la gorge 18h par la paroi intérieure du tube 1.

Le logement circulaire du guide 18 peut présenter une surface périphérique intérieure 18i cylindrique uniforme (figures 2 à 4) ou avec un étranglement radial au fond (figures 5 à 7) servant au centrage du joint d'étanchéité 10. Il est possible de prévoir le diamètre extérieur du bouchon 17 très légèrement supérieur au diamètre de la surface périphérique intérieure 18i du guide 18 de façon à permettre un emmanchement forcé du bouchon dans le logement circulaire du guide. L'extrémité supérieure du tube 1 peut être sertie sur le bouchon 17 pour immobiliser axialement le dispositif d'obturation dans le tube 1 de l'amortisseur.

Lorsque l'amortisseur est souvent en phase de détente, c'est-à-dire lorsque le piston remonte dans le tube, ou que la suspension est excentrée vers le haut ce qui est équivalent être constamment en fin de course amortisseur, il est alors nécessaire, pour freiner le mouvement du piston d'avoir une loi d'amortissement variant de quelques dizaines de daN à quelques tonnes sur très peu de course. Un frein hydraulique peut réaliser une telle décélération sans créer de chocs trop violets.

D'une façon générale, dans les modes de réalisation qui vont maintenant être exposés en détail, la partie inférieure de l'embase de guidage 18a est conformée de façon à coopérer avec une partie supérieure prédéterminée du piston lors de son coulissement. L'embase de guidage ainsi conformée et ladite partie supérieure prédéterminée du piston forment ensemble une butée hydraulique.

Bien que, comme indiqué ci-avant, le tube d'amortisseur comporte un dispositif d'obturation tel que défini ci-avant et incluant notamment un volume de détente pouvant être défini par la gorge annulaire 23 pratiquée sur le côté supérieur de l'embase de guidage, le fond de la gorge communiquant avec lesdites perforations, ou par la gorge annulaire 10d pratiquée sur le joint d'étanchéité en regard des perforations de l'embase, ou encore par la surface inclinée du côté supérieur de l'embase, les figures 8 à 11 qui représentent d'autres modes de réalisation d'un dispositif d'obturation permettant l'obtention d'une butée hydraulique, illustrent plus spécifiquement la partie inférieure de l'embase de guidage et la partie supérieure du piston. Aussi, sur ces figures et à des fins de simplification, les différentes configuration possibles du volume de détente n'ont pas été représentées, et de ce fait les figures 8 à 11 ne représentent pas toutes les caractéristiques de l'invention revendiquée dans la revendication 1.

D'une façon générale, l'embase de guidage 18a comporte une jupe inférieure à l'intérieur de laquelle est apte à pénétrer au moins partiellement la partie supérieure prédéterminée du piston lors de son mouvement de coulissement en fin de phase de détente. Il est prévu un jeu préétabli d'une section de quelques mm², typiquement de 5 à 50 mm², entre la face interne de la jupe et la face latérale externe de la partie supérieure prédéterminée du piston.

Par ailleurs, afin de limiter l'effort au début de la phase de compression suivant la phase de détente, on équipe la partie supérieure prédéterminée du piston d'au moins un passage traversant dont l'ouverture supérieure est obturable par un clapet supérieur flexible. Ainsi, pendant la phase de détente et lors de la pénétration de la partie prédéterminée du piston dans la jupe inférieure du guide, le clapet obture le passage traversant tandis que, au début du mouvement de descente du piston, en début de phase de compression, le clapet flexible s'ouvre très facilement pour dégager l'ouverture supérieure du passage traversant.

Dans le mode de réalisation illustré sur la figure 8, ladite partie supérieure prédéterminée du piston est la rondelle d'appui supérieure standard 50 de ce piston.

Le clapet flexible 51, obturant en phase de détente les passages traversants 53, est disposé entre la face supérieure de cette rondelle d'appui et une rondelle de fixation 52. La jupe inférieure cylindrique 18j de l'embase de guidage 18a, a une épaisseur de quelques millimètres, typiquement de 1 à 5 et 3 mm dans le cas présent. Le jeu 54 entre la face latérale externe 50a de la rondelle d'appui 50 et la face latérale interne 18k de la jupe cylindrique 18j, réalise ici la restriction de fluide permettant l'effet de butée hydraulique, sur les 2 à 5 derniers millimètres de course du piston.

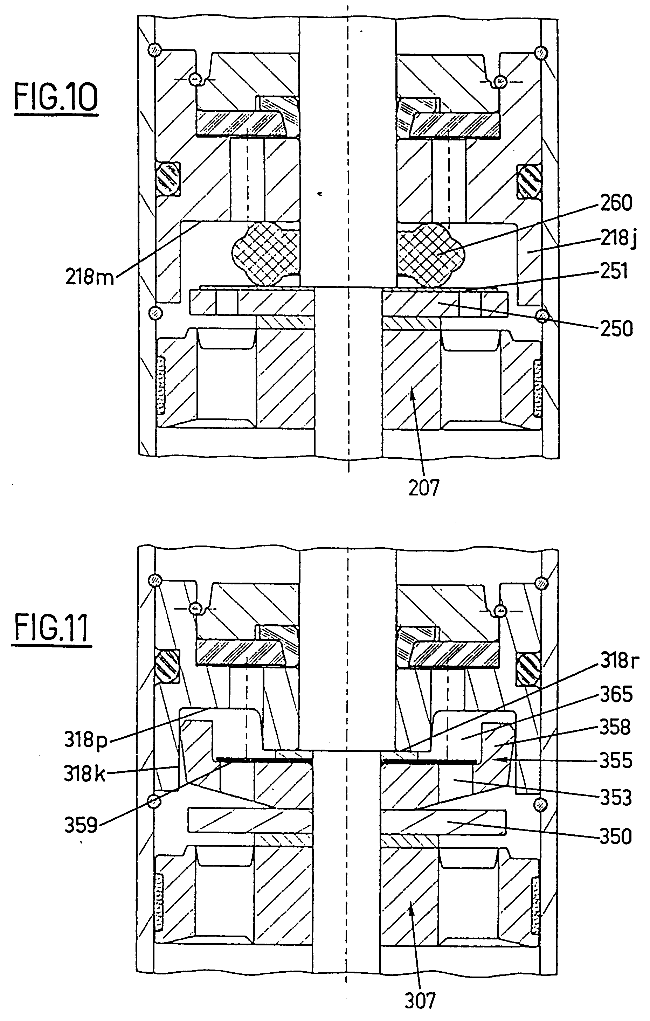

Sur les figures 9 à 11, les éléments analogues ou ayant des fonctions analogues à ceux de la figure 8, ont des références respectivement augmentées de 100, 200 et 300 par rapport à celles que ces mêmes éléments ont sur la figure 8. Seules les différences entre ces figures seront maintenant décrites.

Sur la figure 9, la partie supérieure prédéterminée du piston 155 consiste ici en une extension supérieure supplémentaire disposée sur la rondelle d'appui supérieure du piston 150. Cette extension supérieure 155 possède une face latérale cylindrique externe 157 parallèle à la face latérale cylindrique interne 118k de la jupe cylindrique inférieure 118j de l'embase de guidage. Bien que sur cette figure, la partie cylindrique externe 157 soit représentée quasiment au contact de la jupe cylindrique 118j, il existe bien entendu un jeu entre ces deux surfaces permettant l'effet de butée hydraulique. Par ailleurs, la surface latérale 157 de l'extension 155 est raccordée respectivement aux surfaces inférieure et supérieure de cette extension 155 par deux chanfreins 156 et 158.

La jupe 118j est plus longue que la jupe 18j de la figure 8 ce qui permet d'assurer une butée hydraulique avec une course de 5 à 25 mm, ici 15 mm et ce, toujours avec une épaisseur de jupe 118j de l'ordre de quelques millimètres d'épaisseur.

Bien que la jupe 118j soit représentée ici sous la forme d'un cylindre de diamètre intérieur constant assurant une butée hydraulique non progressive, il est possible d'obtenir une butée continuellement progressive en prévoyant une jupe 118j conique avec une pente de 2° (par exemple) sur les 15 mm de course ou bien une butée hydraulique progressive par palier en prévoyant une jupe 118j ayant trois sections de diamètre différent sur 5 mm de hauteur, respectivement.

Le mode de réalisation illustré sur la figure 10 est sensiblement analogue à celui illustré sur la figure 8 en ce sens que c'est la rondelle d'appui standard du piston 250 qui, en combinaison avec la jupe cylindrique inférieure 218j, réalise l'effet de butée hydraulique. Néanmoins, il peut s'avérer particulièrement avantageux dans certaines applications, de bénéficier de l'apport de deux types de butée, la butée hydraulique, proportionnelle à la vitesse, et une butée élastique proportionnelle au déplacement. A cet effet, il est prévu un organe élastique auxiliaire de butée 260, réalisée en caoutchouc ou polyuréthane. Cet organe de butée élastique est solidaire de la tige du piston et vient s'appuyer contre la face inférieure 218 m de l'embase de guidage.

Dans le mode de réalisation illustré sur la figure 11, la partie supérieure prédéterminée du piston contribuant à l'obtention de la butée hydraulique consiste également en une extension supérieure 355 disposée sur la rondelle d'appui supérieure 350 du piston 307. Néanmoins, alors que dans le mode de réalisation illustré sur la figure 9, la face supérieure de l'extension supérieure 155 est plane et parallèle à la face inférieure plane de l'embase de guidage, dans le mode de réalisation illustré sur la figure 11, la face inférieure de l'embase de guidage comporte une partie centrale plane 318r ainsi qu'un décrochement rentrant annulaire 318p définissant avec la face interne 318k de la jupe cylindrique inférieure une cavité 365.

Par ailleurs, la face supérieure de l'extension supérieure 355 du piston comporte une partie centrale plane 359 à laquelle se raccorde une patte annulaire saillante 358 apte à pénétrer au moins partiellement dans la cavité 365 lors du coulissement du piston en fin de phase de détente.

Par ce mode de réalisation, il est ainsi possible d'imbriquer l'un dans l'autre le piston et le guide de façon à gagner 2 à 8 mm de course, typiquement 5, tout en évitant d'allonger trop fortement la jupe cylindrique.

D'une façon générale, quel que soit le mode de réalisation, l'invention permet d'obtenir avec une même pièce monobloc la fonction de guidage de la tige du piston et celle de butée hydraulique. Par ailleurs, on obtient un excellent centrage du piston qui est centré par le guide et la tige, ainsi qu'une excellente coaxialité du diamètre interne de la jupe cylindrique et de l'alésage de tige du guide.

Enfin, afin de réduire les coûts d'usinage d'une telle pièce, il est possible d'emmancher, de coller, ou de souder, la jupe cylindrique sur un épaulement du guide. Néanmoins, ces deux pièces seront alors rendues monobloc de façon à permettre une automatisation du montage.

## Revendications

1. Tube d'amortisseur hydraulique pressurisé contenant un piston coulissant (7) pourvu d'une tige axiale (8) et un dispositif d'obturation du tube comprenant un joint d'étanchéité (10), un élément de butéé de détente (11, 18) constitué par un guide (18) sous forme cylindrique pourvu d'une embase de guidage (18a) présentant une ouverture centrale (18c) pour guider le mouvement axial de la tige (8), un bouchon (17) ayant une ouverture centrale (17a) ayant un diamètre supérieur au diamètre de la tige du piston pour définir un jeu radial évitant un contact mécanique de guidage de la tige, entre le bouchon et la tige pendant le fonctionnement de l'amortisseur, et présentant un logement circulaire (17b) autour de son ouverture centrale pour recevoir une partie du joint d'étanchéité pris en sandwich entre le bouchon et l'embase de guidage, et des moyens de fixation (19 à 22) du dispositif d'obturation dans le tube, caractérisé par le fait que le guide cylindrique de l'élément de butée de détente comporte une paroi périphérique axiale (18b) définissant un logement circulaire pour supporter et centrer le joint d'étanchéité et le bouchon, et par le fait que l'embase de guidage comporte une ou plusieurs perforations (24) réparties sur un trajet circulaire pour assurer la communication du fluide de l'amortisseur ente d'une part un volume de détente défini par le joint d'étanchéité et l'embase et d'autre part l'intérieur du tube.

2. Tube selon la revendication 1, caractérisé en ce que l'embase de guidage (18a) compote une gorge annulaire (23) sur son côté supérieur, les perforations (24) débouchant dans le fond de la gorge annulaire.

3. Tube selon la revendication 2, caractérisé en ce que la gorge annulaire (23) de l'embase de guidage (18a) présente une section sensiblement trapézoïdale ou en V qui s'évase vers son ouverture.

4. Tube selon la revendication 2 ou 3, caractérisé en ce que la surface annulaire intérieure (18e) de l'embase de guidage est en retrait axial par rapport à la surface annulaire extérieure (18d) de l'embase, lesdites surfaces annulaires étant séparées radialement par la gorge annulaire (23).

5. Tube selon la revendication 1, caractérisé en ce que le joint d'étanchéité (10) présente une gorge annulaire (10d) face axialement aux perforations (24) de l'embase de guidage (18a).

6. Tube selon la revendication 1, caractérisé en ce que l'embase de guidage (18a) présente une surface conique (18g) vers l'intérieur sur son côté supérieur, et que le joint d'étanchéité (10) présente une couronne (10c) en saillie axiale vers l'embase.

7. Tube selon l'une des revendications précédentes, caractérisé en ce qu'entre l'embase de guidage (18a) et le joint d'étanchéité (10) sont formées deux couronnes concentriques d'appui axial.

8. Tube selon l'une des revendications précédentes, caractérisé en ce que le joint d'étanchéité (10) est réalisé en une pièce unique en élastomère.

9. Tube selon l'une des revendications 1 à 7, caractérisé en ce que le joint d'étanchéité (10) est constitué d'une partie statique (10a) sous forme de rondelle assurant l'étanchéité entre le bouchon (17) et la surface intérieure de la paroi périphérique axiale (18b) du guide, et d'une partie dynamique (10b) centrée par rapport à la partie statique et assurant l'étanchéité entre le bouchon et la tige (8) du piston.

10. Tube selon l'une des revendications précédentes, caractérisé en ce que le diamètre de l'ouverture centrale (18c) de l'embase de guidage est supérieur au diamètre de la tige de quelques centièmes de millimètre à un dixième de millimètre.

11. Tube selon l'une des revendications précédentes, caractérisé en ce que le diamètre de l'ouverture centrale (17a) du bouchon est supérieur au diamètre de la tige de quelques dixièmes de millimètre.

12. Tube selon l'une des revendications précédentes, caractérisé en ce que l'embase de guidage (18a) comporte un alésage central dans lequel est monté un coussinet de guidage (18f) tubulaire.

13. Tube selon l'une des revendications précédentes, caractérisé en ce qu'il comprend en outre des moyens de raclage (25) protégeant le jeu radial entre le bouchon et la tige du milieu extérieur.

14. Tube selon l'une des revendications précédentes, caractérisé en ce que le bouchon (17) est emmanché à force dans le logement circulaire du guide (18).

15. Tube selon l'une des revendication 1 à 14, caractérisé en ce que la partie inférieure de l'embase de guidage (18a) du dispositif d'obturation est conformée de façon à coopérer avec une partie supérieure prédéterminée du piston lors de son coulissement, l'embase de guidage ainsi conformée et ladite partie supérieure prédéterminée du piston formant ensemble une butée hydraulique.

16. Tube selon la revendication 15, caractérisé en ce que l'embase de guidage (18a) compote une jupe inférieure (18j), à l'intérieur de laquelle est apte à pénétrer au moins partiellement la partie supérieure prédéterminée du piston lors de son mouvement de coulissement, en ce qu'il est prévu un jeu (54) préétabli entre la face interne de la jupe et la face latérale externe de la partie supérieure prédéterminée du piston et en ce que la partie supérieure prédéterminée de piston est équipée d'au moins un passage traversant (53) dont l'ouverture supérieure est obturable par un clapet supérieur (51) flexible.

17. Tube selon la revendication 16, caractérisé en ce que ladite partie supérieure prédéterminée de piston est une rondelle d'appui supérieure du piston.

18. Tube selon la revendication 16, caractérisé en ce que la partie supérieure prédéterminée du piston consiste en une extension supérieure supplémentaire disposée sur la rondelle d'appui supérieure du piston, cette extension supérieure ayant une face latérale cylindrique externe parallèle à la face latérale cylindrique interne de la jupe cylindrique inférieure de l'embase de guidage.

19. Tube selon la revendication 18, caractérisé en ce que la face supérieure de l'extension supérieure est plane et parallèle à la face inférieure plane de l'embase de guidage.

20. Tube selon la revendication 18, caractérisé en ce que la face inférieure de l'embase de guidage comporte une partie centrale plane et un décrochement rentrant annulaire définissant avec la face interne de la jupe cylindrique inférieure une cavité, en ce que la face supérieure de l'extension supérieure du piston comporte une partie centrale plane à laquelle se raccorde une patte annulaire saillante apte à pénétrer au moins partiellement dans ladite cavité lors du coulissement du piston.

21. Tube selon l'une des revendications 16 à 20, caractérisé en ce que la jupe inférieure est monobloc avec l'embase de guidage ou est rapportée sur cette embase de guidage.

22. Tube selon l'une des revendications 15 à 21, caractérisé en ce qu'il comporte en outre un organe élastique auxiliaire de butée disposée entre la partie supérieure prédéterminée du piston et la face inférieure de l'embase de guidage.

## Claims

1. Pressurized hydraulic shock absorber tube containing a sliding piston (7) equipped with an axial rod (8) and a tube-sealing device comprising a seal (10), a relaxation stop element (11, 18) consisting of a guide (18) in the form of a cylinder equipped with a guide base (18a) which has a central opening (18c) for guiding the axial movement of the rod (8), a plug (17) with a central opening (17a) of a diameter larger than the diameter of the piston rod so as to define a radial clearance to prevent mechanical rod-guiding contact between the plug and the rod while the shock absorber is in operation and having a circular housing (17b) around its central opening to accommodate part of the seal sandwiched between the plug and the guide base, and means (19 to 22) for securing the sealing device in the tube, characterized in that the cylindrical guide of the relaxation stop element comprises an axial peripheral wall (18b) defining a circular housing for supporting and centring the seal and the plug, and in that the guide base comprises one or more perforations (24) distributed in a circular path to allow the shock-absorber fluid to communicate, on the one hand, with a relaxation volume defined by the seal and the base and, on the other hand, with the inside of the tube.

2. Tube according to Claim 1, characterized in that the guide base (18a) has an annular groove (23) on its upper side, the perforations (24) opening into the bottom of the annular groove.

3. Tube according to Claim 2, characterized in that the annular groove (23) of the guide base (18a) has a substantially trapezoidal or V-shaped cross-section widening towards its opening.

4. Tube according to Claim 2 or 3, characterized in that the inner annular surface (18e) of the guide base is axially set back from the outer annular surface (18d) of the base, the said annular surfaces being radially separated by the annular groove (23).

5. Tube according to Claim 1, characterized in that the seal (10) has an annular groove (10d) axially facing the perforations (24) of the guide base (18a).

6. Tube according to Claim 1, characterized in that the guide base (18a) has an inward conical surface (18g) on its upper side, and in that the seal (10) has a ring (10c) projecting axially towards the base.

7. Tube according to one of the preceding claims, characterized in that two concentric axial bearing rings are formed between the guide base (18a) and the seal (10).

8. Tube according to one of the preceding claims, characterized in that the seal (10) is made in one piece from an elastomer.

9. Tube according to one of Claims 1 to 7, characterized in that the seal (10) consists of a static part (10a) in the form of a washer providing a seal between the plug (17) and the inner surface of the axial peripheral wall (18b) of the guide, and of a dynamic part (10b) which is centred relative to the static part and provides a seal between the plug and the piston rod (8).

10. Tube according to one of the preceding claims, characterized in that the diameter of the central opening (18c) of the guide base is greater than the diameter of the rod by between a few hundredths of a millimetre and a tenth of a millimetre.

11. Tube according to one of the preceding claims, characterized in that the diameter of the central opening (17a) of the plug is greater than the diameter of the rod by a few tenths of a millimetre.

12. Tube according to one of the preceding claims, characterized in that the guide base (18a) has a central bore in which a tubular guide bushing (18f) is mounted.

13. Tube according to one of the preceding claims, characterized in that it further comprises scraper means (25) protecting the radial clearance between the plug and the rod from the external environment.

14. Tube according to one of the preceding claims, characterized in that the plug (17) is force-fitted into the circular housing of the guide (18).

15. Tube according to one of Claims 1 to 14, characterized in that the lower part of the guide base (18a) of the sealing device is shaped in such a way as to collaborate with a predetermined upper part of the piston as it slides, the guide base thus shaped and the said predetermined upper part of the piston together forming a hydraulic stop.

16. Tube according to Claim 15, characterized in that the guide base (18a) includes a lower skirt (18j), inside which the predetermined upper part of the piston can at least partially penetrate during its sliding movement, in that a predefined clearance (54) is provided between the inside face of the skirt and the outside lateral face of the predetermined upper part of the piston, and in that the predetermined upper part of the piston has at least one through-passage (53), the upper opening of which can be sealed by a flexible upper valve (51).

17. Tube according to Claim 16, characterized in that the said predetermined upper part of the piston is an upper bearing washer of the piston.

18. Tube according to Claim 16, characterized in that the predetermined upper part of the piston consists of an additional upper extension arranged on the upper bearing washer of the piston, this upper extension having an outside cylindrical lateral face parallel to the inside cylindrical lateral face of the lower cylindrical skirt of the guide base.

19. Tube according to Claim 18, characterized in that the upper face of the upper extension is plane and parallel to the plane lower face of the guide base.

20. Tube according to Claim 18, characterized in that the lower face of the guide base comprises a plane central part and an annular re-entrant recess defining a cavity with the inside face of the lower cylindrical skirt, in that the upper face of the upper extension of the piston includes a plane central part to which there connects a projecting annular lug capable of at least partially penetrating the said cavity as the piston slides.

21. Tube according to one of Claims 16 to 20, characterized in that the lower skirt is of one piece with the guide base or is attached to this guide base.

22. Tube according to one of Claims 15 to 21, characterized in that it further includes an auxiliary elastic stop member arranged between the predetermined upper part of the piston and the lower face of the guide base.

## Patentansprüche

1. Druckbeaufschlagbares Hydraulik-Dämpfungsrohr mit einem Schiebekolben (7), der mit einer axialen Stange (8) versehen ist, und einer Verschlußvorrichtung für das Rohr, die folgendes aufweist: eine Dichtung (10), einen Ausdehnungsanschlag (11, 18), der durch eine zylindrische Führung (18) gebildet wird, welche mit einer Führungsbasis (18a) mit einer mittleren Öffnung (18c) zur Führung der Axialbewegung der Stange (8) versehen ist, einen Stopfen (17) mit einer mittleren Öffnung (17a), deren Durchmesser größer ist als der Durchmesser der Kolbenstange, um ein radiales Spiel zu definieren, wodurch während des Betriebs des Dämpfers ein mechanischer Führungskontakt der Stange zwischen dem Stopfen und der Stange vermieden wird, und mit einer kreisrunden Aufnahme (17b) um seine mittlere Öffnung herum, um einen Teil der zwischen dem Stopfen und der Führungsbasis angeordneten Dichtung aufzunehmen, und Mittel (19 bis 22) zur Befestigung der Verschlußvorrichtung in dem Rohr, dadurch gekennzeichnet, daß die zylindrische Führung des Ausdehnungsanschlags eine axiale Umfangswand (18b) aufweist, die eine kreisrunde Aufnahme zum Abstützen und Zentrieren der Dichtung und des Stopfens definiert, und daß die Führungsbasis eine oder mehrere Perforationen (24) aufweist, die über eine KreisBahn verteilt sind, um die Verbindung des Fluids des Dämpfers zwischen einerseits einem durch die Dichtung und die Basis definierten Ausdehnungsvolumen und andererseits dem Inneren des Rohrs zu gewährleisten.

2. Rohr nach Anspruch 1, dadurch gekennzeichnet, daß die Führungsbasis (18a) eine ringförmige Kehle (23) auf ihrer oberen Seite aufweist, wobei die Perforationen (24) in den Boden der ringförmigen Kehle münden.

3. Rohr nach Anspruch 2, dadurch gekennzeichnet, daß die ringförmige Kehle (23) der Führungsbasis (18a) einen im wesentlichen trapezförmigen Querschnitt oder V-förmigen Querschnitt aufweist, der zu ihrer offenen Seite breiter wird.

4. Rohr nach Anspruch 2 oder 3, dadurch gekennzeichnet, daß die ringförmige Innenfläche (18e) der Führungsbasis in Axialrichtung bezüglich der ringförmigen Außenfläche (18d) der Basis zurückgesetzt ist, wobei die ringförmigen Flächen in Radialrichtung durch die ringförmige Kehle (23) getrennt werden.

5. Rohr nach Anspruch 1, dadurch gekennzeichnet, daß die Dichtung (10) eine ringförmige Kehle (10d) aufweist, die den Perforationen (24) der Führungsbasis (18a) axial gegenüberliegt.

6. Rohr nach Anspruch 1, dadurch gekennzeichnet, daß die Führungsbasis (18a) auf ihrer oberen Seite eine nach innen konisch verlaufende Oberfläche (18g) aufweist und daß die Dichtung (10) einen axial zur Basis Vorragenden Ring (10c) enthält.

7. Rohr nach einem der vorhergehenden Ansprüche, dadurch gekennzeichnet, daß zwischen der Führungsbasis (18a) und der Dichtung (10) zwei konzentrische Axiallagerungsringe gebildet sind.

8. Rohr nach einem der vorhergehenden Ansprüche, dadurch gekennzeichnet, daß die Dichtung (10) einstückig aus einem Elastomer hergestellt ist.

9. Rohr nach einem der Ansprüche 1 bis 7, dadurch gekennzeichnet, daß die Dichtung (10) aus einem statischen Teil (10a) in Form einer Scheibe, die eine Abdichtung zwischen dem Stopfen (17) und der Innenfläche der axialen Umfangswand (18b) der Führung gewährleistet, und einem dynamischen Teil (10b), der bezüglich des statischen Teils zentriert ist und eine Abdichtung zwischen dem Stopfen und der Stange (8) des Kolbens gewährleistet, besteht.

10. Rohr nach einem der vorhergehenden Ansprüche, dadurch gekennzeichnet, daß der Durchmesser der mittleren Öffnung (18c) in der Führungsbasis um einen Betrag von einigen Hundertstel Millimeter bis einem Zehntel Millimeter größer ist als der Durchmesser der Stange.

11. Rohr nach einem der vorhergehenden Ansprüche, dadurch gekennzeichnet, daß der Durchmesser der mittleren Öffnung (17a) des Stopfens um einige Zehntel Millimeter größer ist als der Durchmesser der Stange.

12. Rohr nach einem der vorhergehenden Ansprüche, dadurch gekennzeichnet, daß die Führungsbasis (18a) eine mittlere Bohrung aufweist, in der eine röhrenförmige Führungsbuchse (18f) angebracht ist.

13. Rohr nach einem der vorhergehenden Ansprüche, dadurch gekennzeichnet, daß es des weiteren Schabmittel (25) aufweist, die das radiale Spiel zwischen dem Stopfen und der Stange vor der äußeren Umgebung schützen.

14. Rohr nach einem der vorhergehenden Ansprüche, dadurch gekennzeichnet, daß der Stopfen (17) unter Kraftaufwand in die kreisrunde Aufnahme der Führung (18) hineingepreßt ist.

15. Rohr nach einem der Ansprüche 1 bis 14, dadurch gekennzeichnet, daß der untere Teil der Führungsbasis (18a) der Verschlußvorrichtung so geformt ist, daß er mit einem vorbestimmten oberen Teil des Kolbens bei seinem Verschieben zusammenwirkt, wobei die so geformte Führungsbasis und der vorbestimmte obere Teil des Kolbens zusammen einen hydraulischen Anschlag bilden.

16. Rohr nach Anspruch 15, dadurch gekennzeichnet, daß die Führungsbasis (18a) eine untere Schürze (18j) aufweist, in die der vorbestimmte obere Teil des Kolbens bei seiner Schiebebewegung zumindest teilweise eindringen kann, daß ein vordefiniertes Spiel (54) zwischen der Innenseite der Schürze und der lateralen Außenseite des vorbestimmten oberen Teils des Kolbens vorgesehen ist und daß der vorbestimmte obere Teil des Kolbens mit mindestens einem durch ihn hindurchführenden Durchgang (53) versehen ist, dessen obere Öffnung durch ein flexibles oberes Ventil (51) verschließbar ist.

17. Rohr nach Anspruch 16, dadurch gekennzeichnet, daß der vorbestimmte obere Teil des Kolbens eine obere Lagerungsscheibe des Kolbens ist.

18. Rohr nach Anspruch 16, dadurch gekennzeichnet, daß der vorbestimmte obere Teil des Kolbens aus einer zusätzlichen oberen Verlängerung auf der oberen Lagerungsscheibe des Kolbens besteht, wobei diese obere Verlängerung eine zylindrische, laterale Außenfläche aufweist, die parallel zu der zylindrischen, lateralen Innenfläche der zylindrischen unteren Schürze der Führungsbasis verläuft.

19. Rohr nach Anspruch 18, dadurch gekennzeichnet, daß die Oberseite der oberen Verlängerung eben ist und parallel zu der ebenen Unterseite der Führungsbasis verläuft.

20. Rohr nach Anspruch 18, dadurch gekennzeichnet, daß die Unterseite der Führungsbasis einen ebenen mittleren Teil und einen einspringenden ringförmigen Absatz enthält, der mit der Innenseite der zylindrischen unteren Schürze einen Hohlraum definiert, und daß die Oberseite der oberen Verlängerung des Kolbens einen ebenen mittleren Teil enthält, mit dem ein ringförmiger vorspringender Lappen verbunden ist, der bei der Verschiebung des Kolbens zumindest teilweise in den Hohlraum eindringen kann.

21. Rohr nach einem der Ansprüche 16 bis 20, dadurch gekennzeichnet, daß die untere Schürze einstückig mit der Führungsbasis ausgebildet oder mit dieser Führungsbasis verbunden ist.

22. Rohr nach einem der Ansprüche 15 bis 21, dadurch gekennzeichnet, daß es des weiteren ein zusätzliches elastisches Anschlagglied aufweist, das zwischen dem vorbestimmten oberen Teil des Kolbens und der Unterseite der Führungsbasis angeordnet ist.
